# EUROPÄISCHE PATENTSCHRIFT

(11) **EP 0 705 416 B1**
(45) Veröffentlichungstag und Bekanntmachung des Hinweises auf die Patenterteilung: **20.01.1999**
(21) Anmeldenummer: 94918837.9
(22) Anmeldetag: 03.06.1994
(51) Int. Cl.: F28D 20/02, F28D 1/03

(54) **Latentwärmespeichermedium und ein Heizkörper mit einem derartigen Medium**
Latent heat storage medium and a heater with such a medium
Milieu thermique à changement d'état et radiateur comprenant un tel milieu

(30) Priorität: 29.06.1993 DE 4321457; 17.07.1993 DE 4323997; 25.01.1994 DE 4402062
(43) Veröffentlichungstag der Anmeldung: 10.04.1996
(73) Patentinhaber: Schümann Sasol GmbH & Co. KG, 20457 Hamburg (DE)
(72) Erfinder: FIEBACK, Klaus, D-10369 Berlin (DE); MATTHÄI, Michael, D-24558 Henstedt-Ulzburg (DE); KRÄMER, Thomas, D-74740 Adelsheim (DE); HILDEBRAND, Günter, D-06729 Rehmsdorf (DE); KUTZKER, Lutz, D-15517 Fürstenwalde (DE)
(74) Vertreter: Müller, Enno, Dipl.-Ing.
(86) Internationale Anmeldenummer: EP9401806
(87) Internationale Veröffentlichungsnummer: WO9501542

(56) Entgegenhaltungen:
- GB-A- 2 143 025
- GB-A- 2 183 326
- US-A- 4 100 092
- US-A- 4 241 782
- PATENT ABSTRACTS OF JAPAN vol. 9, no. 209 (M-407) 27. August 1985 & JP,A,60 069 491 (MATSUSHITA DENKI SANGYO KK) 20. April 1985
- PATENT ABSTRACTS OF JAPAN vol. 16, no. 141 (M-1232) 9. April 1992 & JP,A,04 000 187 (SOTARO OSATO) 6. Januar 1992
- SOLAR ENERGY, Bd.30, Nr.4, 1983, OXFORD GB Seiten 313 - 332 ABHAT 'low temperature latent heat thermal energy storage'

## Beschreibung

Die Erfindung betrifft ein Latentwärmespeichermedium nach dem Oberbegriff des Anspruches 1 Ein derartiges Latentspeichermedium ist, zum Beispiel, aus der US-A-4 241 782 bekannt.

Um die Materialbelastung einer mit einem derartigen Latentwärmespeichermaterial gefüllten Speicherkammer Herabzusetzen, schlägt die Erfindung ein Latenwärmespeicher medium entsprechend den Merkmalen des Anspruches 1 vor. Die Erfindung betrifft auch einen Heizkörper nach dem Oberbegriff des Anspruches 4 und nach dem Oberbegriff des Anspruchs 5.

Derartige Heizkörper sind in vielfältigen Ausgestaltungen bekannt. Beispielsweise als Plattenheizkörper oder als Rippenheizkörper, welche jeweils eine erhebliche Strahlungsfläche besitzen. Darüber hinaus sind auch hinsichtlich einer Konvektions-Wärmeübertragung optimierte Heizkörper bekannt. Diese bestehen beispielsweise aus lamellenartigen, eng nebeneinander angeordneten Blechelementen, die etwa auf ein diese Blechelement axial durchsetzendes Rohr aufgereiht sind.

Aus dem Stand der Technik gemäß US-PS 4 241 782 ist ein Behältnis für einen Latentwärmespeichermaterial bekannt, welches aus einem Steinmaterial mit Metallanteilen besteht. Die Wärmeübertragung zu diesem Behältnis erfolgt durch vorbeistreichende Luft.

Die GB-A 283 326 betrifft einen Wärmespeicher. Es soll Wärme über längere Zeit mit möglichst geringen Verlusten gespeichert werden. Daher ist ein Speicher für Latentwärmematerial eng eingeschlossen zwischen zwei benachbarten Speicher mit Wasser oder dergleichen.

Weiter sind auch Heizkörper für Nachtspeicherheizungen bekannt, bei welchem etwa mittels elektrischer Energie nachts ein Wärmespeichermedium, in der Regel ein Steinkörper hoher Wärmekapazität, aufgeheizt wird und sodann tagsüber durch Strahlung und Konvektion Wärme in den aufzuwärmenden Raum abgibt.

Bei diesen bekannten Heizkörpern ist entweder eine geringe Wärmekapazität gegeben oder aufgrund von hohen Speichertemperaturen eine Unbehaglichkeit festzustellen. Bei den angesprochenen Nachtspeicher-Heizkörpern nimmt die Temperatur des Wärmespeichers überdies mit zunehmender Wärmeabgabe ab. Während anfangs bei hohen Temperaturen es auch beispielsweise zu Staubverbrennungen und Geruchsbelästigungen kommen kann, durchläuft das System nur für eine vergleichsweiser geringe Zeit einen Zustand, in welchem eine als behaglich empfundene Wärme abgegeben wird.

Angestrebt wird bei solchen Heizkörpern ein gewisser "Kachelofeneffekt". Es soll kontinuierlich Wärme über Strahlung und Konvektion von Flächen abgegeben werden, die eine nicht allzu hohe Temperatur aufweisen. Auch wenn eine weitere Energiezufuhr zu dem Heizkörper nicht mehr gegeben ist, etwa infolge einer Nachtabsenkung bei Zentralheizungsanlagen, soll sich noch über gewisse Zeit eine die Behaglichkeitsgrenze nicht unterschreitende Wärmeabgabe einstellen. Dies gilt gleichermaßen für eine temporäre Vorrangschaltung der Heizungsanlage zur Warmwasserbereitung.

Bei Wasserheizungen ist dies nicht erreichbar aufgrund einer in der Regel geringen Wärmespeicherfähigkeit. Bei modernen Heizungsanlagen ist die Wärmespeicherfähigkeit infolge sehr geringer Füllvolumina besonders niedrig. Es ist auch bereits vorgeschlagen worden, vor Heizkörper Keramikplatten zu hängen, die eine gewisse, allerdings geringe Speicherfähgikeit besitzen. Diese erbringen zwar eine gewisse Verbesserung, sind aber bei weitem noch nicht zufriedenstellend.

Ausgehend von dem zuletzt genannten Heizkörper mit vorgehängten Keramikplatten ist die technische Problemstellung bei einem Gegenstand des Anspruches 4 gelöst, wobei darauf abgestellt ist, daß eine gesonderte, abgeschlossene Speicherkammer, in welcher sich das Latentwärmespeichermedium befindet, vorgesehen ist, wobei die Speicherkammer durch Strahlungswärme oder Konvektionswärme unter Ausbildung auch für eine Luftströmung offenen Zwischenraums zwischen der Wasserkammer und der Speicherkammer aufheizbar ist. In einer besonderen Ausführungsform ist darauf abgestellt, daß die abgeschlossene Speicherkammer wohnraumseitig bezüglich des Heizkörpers angeordnet ist.

Der genannte Heizkörper besteht mithin sowohl aus einem Latentspeicher wie auch aus einem herkömmlichen Heizkörperbauteil. Wesentlich ist, daß der Latentwärmespeicher im Zuge eines normalen Heizvorganges mit aufgeheizt wird. Wird nun die Wärmeversorgung des eigentlichen Heizkörpers, beispielsweise Heizkörper für eine Warmwasserheizung, abgestellt, bspw. im Zuge einer Nachtabsenkung, so gibt der Heizkörper gleichwohl weiterhin über einen vergleichsweise langen Zeitraum Wärme aus der Speicherkammer ab. Da diese mit Latentwärmespeichermaterial gefüllt ist, stellt sich zudem der Effekt ein, daß die Wärme praktisch ohne wesentliche Temperaturabsenkung abgegeben wird, bis die dem Latent-wärmespeicher zugrundeliegende Phasenumwandlung des Latentwärmespeichermediums abgeschlossen ist. Die Anordnung der Speicherkammer relativ zu einer Konvektionsfläche eines herkömmlichen Heizkörpers kann so vorgenommen sein, daß die beiden Elemente mit einem gewissen Abstand zueinander - flächig gegenüberliegend - angeordnet sind. Sie befinden sich so im wesentlichen in einem Strahlungswärmeaustausch. Bei Ansteigen der Temperatur des bspw. Wasser-Heizkörpers wird auch die Speicherkammer mit dem Latentwärmespeichermedium aufgeheizt. Darüber hinaus ist es natürlich auch möglich, daß der Latentwärmespeicher unmittelbar in dem Heizkörper integriert ist und bspw. außen von Warmwasser umströmt wird. Auch kann der Latentwärmespeicher in unmittelbarem Flächenkontakt zu etwa einem Plattenheizkörper angeordnet sein. Darüber hinaus kann auch die Trennwand des Latentwärmespeichers gleichzeitig die Trennwand des Plattenheizkörpers sein, so daß auf einer Seite dieser (Zwischen-) Wand sich Latentwärmespeichermedium befindet, auf der anderen Seite dagegen Wasser des Heizkörpers strömt. Im Falle eines Konvektions-Heizkörperelementes kann die Speicherkammer auch beispielsweise oberhalb dieses Heizkörperelementes angeordnet sein, so daß die aufsteigende erwärmte Luft konvektiv Wärme an die Speicherkammer abgibt. Im einzelnen ist es möglich, die Speicherkammer sowohl als dynamischen wie auch als statischen Latentwärmespeicher auszubilden. Zu einem statischen Latentwärmespeicher ist bspw. auf einen Stand der Technik gemäß der DE-A1 27 41 829 zu verweisen. Zu den erwähnten dynamischen Latentwärmespeichern ist bspw. auf einen Stand der Technik zu verweisen, wie er aus der DD 23 68 62 und der DD 28 01 13 bekannt ist. Auch ist in diesem Zusammenhang auf die DE-A1 41 22 659 zu verweisen. Bezüglich hierzu geeigneten Speichermediums auf Paraffinbasis ist auf die nicht vorveröffentlichte Patentanmeldung 43 07 065.5 zu verweisen. Zum besseren Wärmetransport in der Speicherkammer wird auch vorgeschlagen, daß im Inneren der Speicherkammer ein mit den Kammerwänden der Speicherkammer in Verbindung stehendes wärmeleitfähiges Gitter, insbesondere Metallgitter angeordnet ist. Ein solches Metallgitter, bei dem auch mehrere Lagen vorgesehen sein können, verbessert die Möglichkeit der Speicherkammer, die Wärme des Latentspeichermaterials kontinuierlich aus- bzw. einzuspeichern. Insbesondere ist dies von Bedeutung hinsichtlich eines rascheren Einspeicherns von Wärme, da hiermit der an sich schlechten Wärmeleitfähigkeit des Latentwärmespeichermediums, beispielsweise wenn dieses ein solches auf Paraffinbasis ist, entgegengewirkt wird. In weiterer Ausgestaltung ist vorgesehen, daß die Speicherkammer mit Abstand zu der Konvektionsfläche (des eigentlichen Heizkörpers) ausgebildet ist und ihrerseits eine Speicher-Konvektionsfläche ausbildet. Hierbei empfiehlt es sich, daß die Speicherkammer geometrisch an die Gestaltung der Heizkörper-Konvektionsfläche angepaßt ist. Auch kann die Speicherkammer zwischen zwei Konvektionsflächen des Heizkörpers angeordnet sein. Eine bevorzugte Ausbildung ist bspw. auch dadurch gegeben, daß die Speicherkammer in Form eines Plattenkörpers, entsprechend einem Plattenheizkörper, ausgebildet ist. Auch empfiehlt es sich, daß die Speicherkammer raumseitig bezüglich einer Konvektionsfläche des Heizkörpers angeordnet ist. Es empfiehlt sich auch, im Hinblick auf eine dynamische Ausbildung des Latentwärmespeichers, dem Latentwärmespeichermedium ein Wärmetransportmittel bspw. in Form eines Öles beizugeben. Hierzu kann bspw. ein herstellungsmäßig nicht oder nicht vollständig entöltes Paraffin verwendet werden. Im einzelnen ist hierzu auch auf vorgenannte deutsche Patentanmeldung P 43 07 065.5 zu verweisen. Darüber hinaus eignet sich als Wärmetransportmittel auch ein Feuerlöschmittel wie beispielsweise Tetrachlorkohlenstoff bzw. ein vergleichbares chlorfreies Feuerlöschmittel. Hinsichtlich der angesprochenen Anwendung im Zusammenhang mit einer Elektroheizung oder auch Elektronachtspeicherheizung, ist eine vorteilhafte Ausgestaltung vorgesehen, bei welcher das Latentwärmespeichermedium unmittelbar elektrisch aufheizbar ist. Dies kann durch elektrische Leiter, bspw. blanke Drähte geschehen, welche das Latentwärmespeichermedium durchsetzen. Bspw. kann hierzu auch das bereits oben angesprochene Gitter zur Anwendung kommen. Von weiterer Bedeutung ist auch eine Ausführungsform, bei welcher die Speicherkammer - evtl. gemeinsam mit einem benachbart angeordneten herkömmlichen konvektionsheizkörper - über einen Ventilator anblasbar ist (Ventilatorkonvektoren). Hierdurch kann es bspw . möglich sein, größere Wärmemengen in einem kleinen Zeitraum abzugeben, etwa wenn eine rasche Aufheizung eines Raumes erwünscht ist. Die Erfindung betrifft auch die Ausgestaltung des Latentwärmespeichermediums auf Paraffinbasis. Ein Latentwärmespeichermedium auf Paraffinbasis mit einem engen C-Kettenbereich kann infolge der bei einer Temperaturänderung auftretenden hohen Volumenkontraktion und -dilatation kurzseitig zu sehr hohen Materialbelastungen der Heizkörperkonstruktion führen. Zur zuverlässigen Vermeidung dieser Erscheinung hat sich überraschenderweise ein Gemisch aus graduell unterschiedlichen Paraffinkohlenwasserstoffen bewährt. Das Latentwärmespeichermedium setzt sich aus einem Gemisch aus Paraffinkohlenwasserstoffen unterschiedlicher Schmelztemperaturen zusammen. Ein solches Latentwärmespeichermedium hat den überraschenden Vorteil, daß die an sich bei einem Übergang von fest/flüssig gegebene Volumenausdehnung oder Volumenverminderung sehr gering ausfällt. Dies ist für einen erwünscht hohen Füllgrad einer Speicherkammer von wesentlicher Bedeutung. Darüber hinaus wird einhergehend ein allmählicher, ungehinderter kontinuierlicher Aufschmelzprozeß ermöglicht. Überhitzte niedrigschmelzende Strukturen erhöhen weiter die Wärmeübertragungsleistungen und verkürzen somit die Aufschmelzzeit (noch feste Strukturen werden konvektiv von flüssigen Strukturen umhüllt und beaufschlagt und damit schneller zum Schmelzen gebracht). Im einzelnen ist in diesem Zusammenhang vorgesehen, daß ca. 60 oder mehr Massenprozente des Latentwärmespeichermediums (der Gesamtmasse) im Hauptarbeitsbereich des Heizkörpers, d.h. in dem für den Heizkörper ausgewählten Temperaturbereich bezüglich der Phasenumwandlung vorliegen, und daß bis zu 30 %, vorzugsweise bis zu 25 % der Masse des Latentwärmespeichermediums eine Schmelztemperatur aufweist, die 1 bis 10° K unter der Schmelztemperatur des größten Massenanteils liegt. Der größte Massenanteil, also der vorerwähnte mit 60 oder mehr Massenprozenten, definiert durch seine Schmelztemperatur den Hauptarbeitsbereich, der in der Realität immer eine - wenn auch geringe - Temperaturspanne beinhaltet. Weiter kann bis zu 30 Massenprozente, vorzugsweise bis zu 25 % des Latentwärmespeichermediums bis zu 25° K, vorzugsweise bis 22 K, unter der Temperatur des größten Anteils des Latentwärmespeichermediums, also bis zu 22 bzw. 25° K unter der Temperatur, welche den Hauptarbeitsbereich kennzeichnet, vorgesehen sein. Darüber hinaus kann weiter vorzugsweise ein Anteil von bis zu sechs Massenprozenten der Einsatzmasse des Latentwärmespeichermediums, nämlich paraffinischen Kohlenwasserstoffen kristalliner Struktur, mit einer Schmelztemperatur von 25 bis 40° K oder - alternativ - bis zu 35° K, oberhalb der Temperatur des Hauptarbeitsbereiches vorgesehen sein. Nicht zuletzt kann auch bis zu ein Massenprozent eines polymeren Additivs vorgesehen sein. Im einzelnen kann dies ein Strukturadditiv aus der Verbindungsklasse der Polyalkylmethacrylate, Polyalkylacrylate, Ethylen-Propylen-Copolymere oder alkylierten Naphthline sein.

Eine beispielhafte Zusammensetzung des Latentwärmespeichermediums ist folgende:
50 Ma (Massen-) -% bis 25 Ma-% eines paraffinischen Kohlenwasserstoffgemisches im Schmelzbereich von 56° C bis 58° C
25 Ma-% eines paraffinischen Kohlenwasserstoffgemisches im Schmelzbereich von 52° C bis 54° C
20 Ma-% eines paraffinischen Kohlenwasserstoffgemisches im Schmelzbereich von 42° C bis 44° C
4,9 Ma-% eines paraffinischen Kohlenwasserstoffgemisches im Schmelzbereich von 69° C bis 73° C
0,1 Ma-% eines Strukturadditivs der Verbindungsklasse der Polyalkylmethacrylate.

Das vorstehend beschriebene Latentwärmespeichermedium ist auch bei anderen Latentwärmespeichern von Bedeutung. Bspw. bei dem in der bereits weiter vorne genannten deutschen Patentanmeldung P 43 07 065.5 beschriebenen Latentwärmespeicher. Darüber hinaus auch in einem Latentwärmespeicher, wie er in der deutschen Patentanmeldung P 43 42 020.6 beschrieben ist.

Nachstehend ist die Erfindung des weiteren anhand der beigefügten Zeichnung, die jedoch lediglich Ausführungsbeispiele darstellt, erläutert. Hierbei zeigt:
- Fig. 1: eine perspektivische Darstellung eines Heizkörpers mit Speicherkammer;
- Fig. 2: einen Querschnitt durch den Heizkörper gemäß Fig. 1, geschnitten entlang der Linie II-II;
- Fig. 3: eine weitere Ausführungsform der Speichers eines Heizkörpers mit Speicherkammer, bei Anordnung der Speicherkammer zwischen zwei Plattenheizkörperelementen;
- Fig. 4: einen Querschnitt durch den Heizkörper gemäß Fig. 3, geschnitten entlang der Linie IV-IV;
- Fig. 5: eine perspektivische Darstellung, teilweise im Längsschnitt einer weiteren Ausführungsform eines Heizkörpers mit Speicherkammer, bei formmäßiger Anpassung der Speicherkammer an Konvektionsflächen des Heizkörpers;
- Fig. 6: eine Darstellung gemäß Fig. 5, bei welcher der Latentwärmespeicher in unmittelbarem Flächenkontakt zu einem Plattenheizkörperelement angeordnet ist.

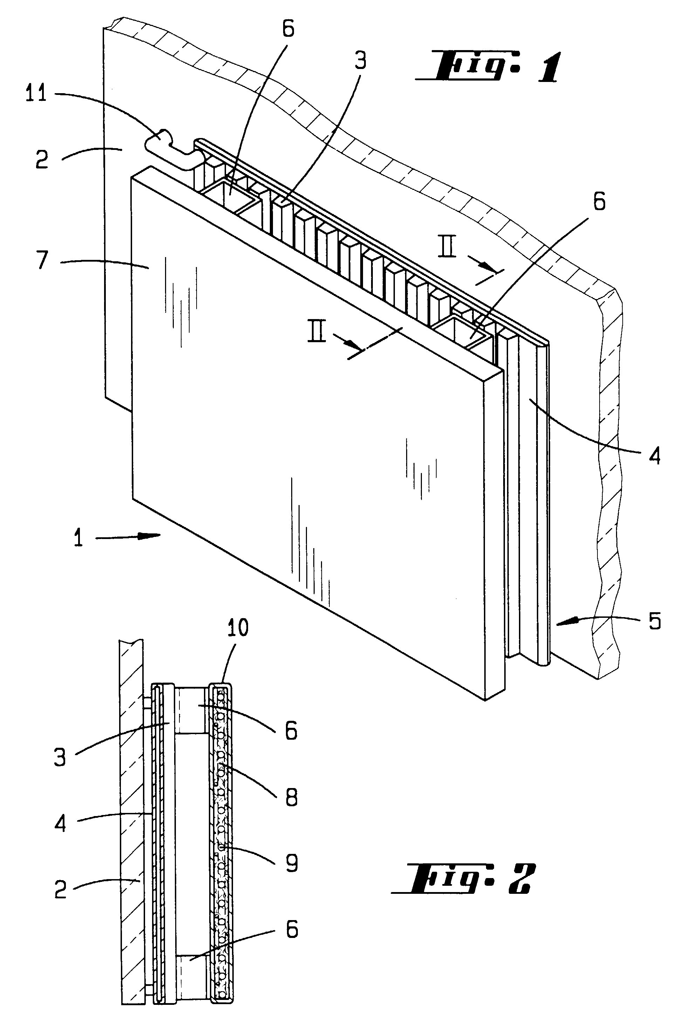

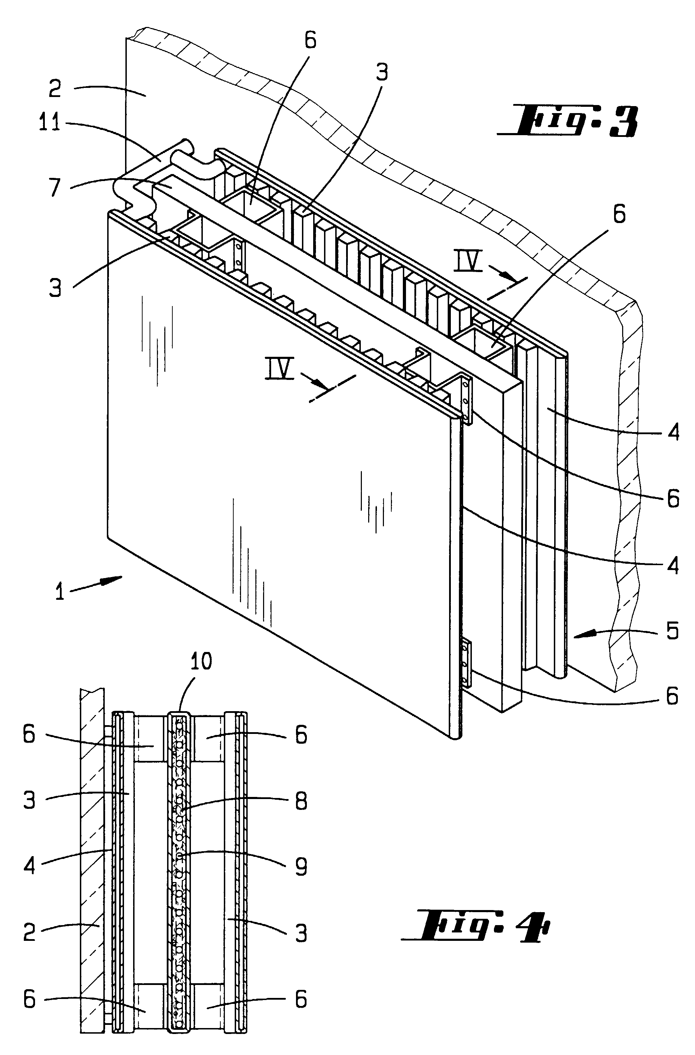

Dargestellt und beschrieben ist - zunächst mit Bezug zu Fig. 1 - ein Heizkörper 1, der an einer Wand 2, bspw. in einem Wohnraum, angebracht ist. Der Heizkörper 1 besitzt eine Konvektionsfläche 3, die beim Ausführungsbeispiel durch ein U-förmiges Blech gebildet ist, das auf eine Oberfläche 4 des Plattenheizkörperelementes 5 aufgebracht ist. An der Konvektionsfläche 3 ist weiterhin über zwei U-förmige Bleche 6 eine Speicherkammer 7 befestigt, die ein gesondertes abgeschlossenes Volumen aufweist, in welchem sich ein Latentwärmespeichermedium 8 (vgl. Fig. 2) befindet. Es ist ersichtlich, daß die Speicherkammer 7 - in ihrer rückwärtigen Zuordnung zu der Konvektionsfläche 3 - im Strahlungswärmeaustausch mit der Konvektionsfläche 3 steht. Darüber hinaus ist natürlich auch ein gewisser konvektiver Wärmeübergang durch die zwischen der Speicherkammer 7 und der Konvektionsfläche 3 strömende Luft auf die Speicherkammer 7 gegeben.

Im einzelnen ist die Speicherkammer 7 als statischer oder dynamischer Latentwärmespeicher ausgebildet. Zu weiteren Erläuterungen wird hierzu auf die weiter oben angegebene Literatur verwiesen. Im Inneren der Speicherkammer 8 ist ein in Fig. 2 lediglich angedeutetes Drahtgitter 9 angeordnet, das aufgrund seiner Wärmeleitfähigkeit insbesondere für einen besseren Wärmetransport in das Innere der Speicherkammer 4 sorgt. Das Drahtgitter 9 ist in seinen Randbereichen mit der metallischen Wand 10 der Speicherkammer 7 verbunden.

Bei der Ausführungsform gemäß Fig. 3 liegen im wesentlichen gleiche Verhältnisse vor, wie bezüglich Fig. 1 erläutert. Nur ist hier das Plattenheizkörperelement 5 zweifach vorgesehen und die Speicherkammer 7 zwischen den beiden Plattenheizkörperelementen 5 angeordnet.

Fig. 4 zeigt eine entsprechende Querschnittsdarstellung.

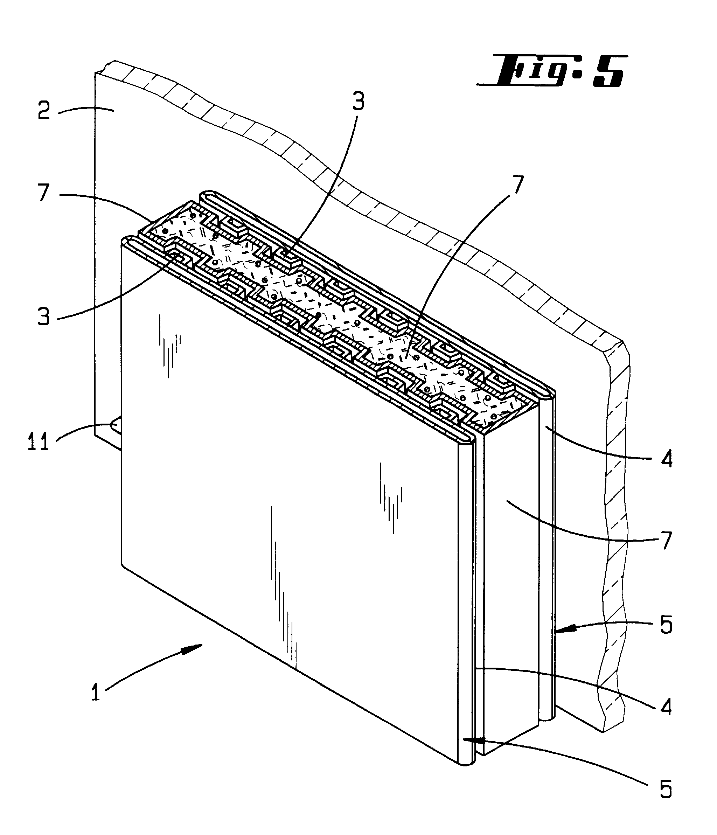

Auch bei einem Heizkörper gemäß Fig. 5 sind im wesentlichen gleiche Bedingungen gegeben. Nur ist hier darüber hinaus noch vorgesehen, was im Rahmen der Erfindung auch eine besondere Bedeutung hat, daß die Speicherkammer 7 geometrisch angepaßt ist an die Konvektionsflächen 3 der Plattenheizkörperelemente 5. Es ergibt sich hierdurch noch durch den möglichen geringen Spalt zwischen der Speicherkammer 7 und dem Plattenheizkörperelementen 5 ein verbesserter Strahlungswärmeaustausch zu der Speicherkammer 7.

Im übrigen ist ersichtlich, bspw. aus Fig. 1, daß die wasserdurchströmten Teile des Heizkörpers 1 in üblicher Weise über Rohre 11 - gegebenenfalls mit Vor- und Rücklauf - an das Wassernetz der Hausheizung angeschlossen sind.

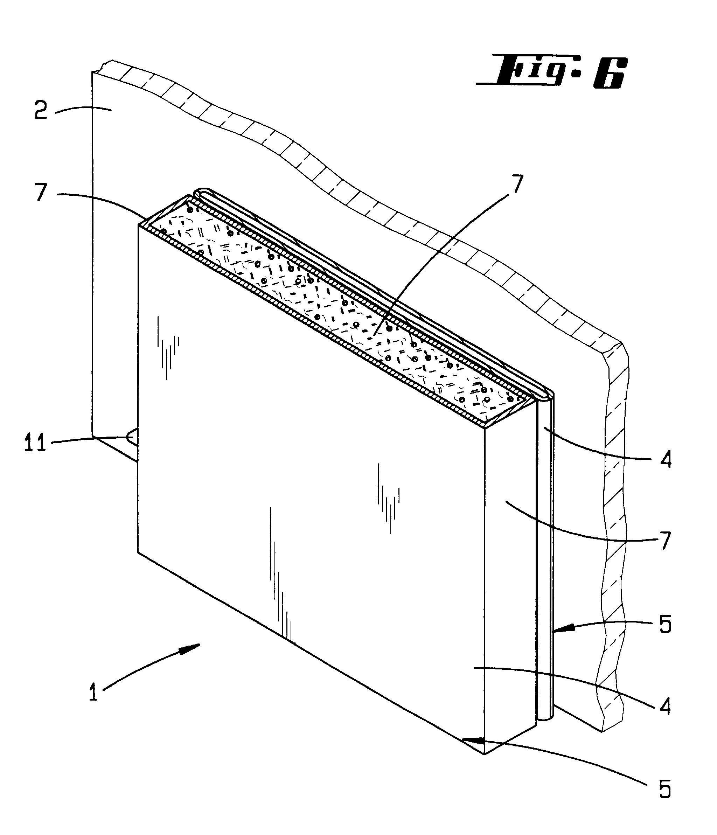

In Fig. 6 ist zu erkennen, daß die Speicherkammer 7 des Latentwärmespeichers in unmittelbarem Flächenkontakt zu einer Außenfläche (raumseitig) des Plattenheizkörperelementes 5 angeordnet ist. Der Wärmeübergang geschieht durch Wärmeleitung durch die aufeinanderliegenden Wände des Speicherelementes bzw. des Plattenheizkörperelementes.

Wie insbesondere auch Fig. 5 zu entnehmen ist, kann die Speicherkammer 7 als Zusatzelement gefertigt sein, das zwischen zwei Plattenheizkörperelemente 5 einhängbar oder einschiebbar ist. Bevorzugt ist hierbei, daß das Speicherelement von der Raumseite her gesehen hinter einem Plattenheizkörperelement 5 anordbar ist. Die Erfindung hat insbesondere auch Bedeutung hinsichtlich eines Nachrüstelementes für bestehende Heizkörper, wobei solche Speicherkammer 7 als Nachrüstelement vorhandene Profile von Plattenheizkörpern angepaßt ist, zum Einschieben/Einhängen.

## Patentansprüche

1. Latentwärmespeichermedium auf Basis paraffinischer Kohlenwasserstoffe aus einem durch verschiedene Massenanteile gegebenen Gemisch von Paraffinkohlenwasserstoffen unterschiedlicher Schmelztemperaturen dadurch gekennzeichnet, daß zur Herabsetzung der Materialbelastung einer mit dem Latentwärmespeichermaterial gefüllten Speicherkammer infolge von bei Durchgang durch die Umwandlungstemperatur auftretender hohen Volumenkontraktion und -dilatation, bis zu 30 % der Masse des Latentwärmespeichermediums eine Schmelztemperatur aufweist, die bis zu 25 K unter dem Hauptarbeitsbereich des Latentwärmespeichermediums liegt, wobei der Hauptarbeitsbereich durch die Schmelztemperatur des größten, ca. 60 oder mehr Massenprozente aufweisenden Massenanteiles des Latentwärmespeichermediums definiert ist.

2. Latentwärmespeichermedium nach Anspruch 1, dadurch gekennzeichnet, daß bis zu 6 % der Masse des Latentwärmespeichermediums 25 bis 40 K oberhalb des Hauptarbeitsbereiches liegt.

3. Latentwärmespeichermedium nach Anspruch 1 oder 2, dadurch gekennzeichnet, daß bis zu 1 % der Masse des Latentwärmespeichermediums ein polymeres Additiv ist.

4. Heizkörper (1) zur Anbringung in einem Wohnraum, mit einer Konvektionsfläche (3) und, beispielsweise im Falle eines Heizkörpers für die Warmwasserheizung, einer eine Einström- und eine Ausströmöffnung aufweisenden Wasserkammer, mit einem Latentwärmespeichermedium nach einem der Ansprüche 1 bis 3, gekennzeichnet durch eine gesonderte, abgeschlossene Speicherkammer (7), in welcher sich das Latentwärmespeichermedium (8) befindet, wobei die Speicherkammer (7) durch Strahlungswärme oder Konvektionswärme unter Ausbildung eines auch für die Luftströmung offenen Zwischenraumes zwischen der Wasserkammer und der Speicherkammer (7) aufheizbar ist.

5. Heizkörper (1) nach den Merkmalen des Oberbegriffes des Anspruches 4, gekennzeichnet durch eine gesonderte, abgeschlossene Speicherkammer (7), in welcher sich das Latentwärmespeichermedium (8) befindet, wobei die Speicherkammer wohnraumseitig bezüglich der Wasserkammer und in Flächenkontakt mit dieser angeordnet ist.

6. Heizkörper (1) nach einem der Ansprüche 4 oder 5, daurch gekennzeichnet, daß die Speicherkammer (7) als statischer Latentwärmespeicher ausgebildet ist.

7. Heizkörper nach einem der Ansprüche 4 oder 5, dadurch gekennzeichnet, daß die Speicherkammer (7) als dynamischer Latenwärmespeicher ausgebildet ist.

8. Heizkörper nach einem der Ansprüche 4 bis 7, dadurch gekennzeichnet, daß im Inneren der Speicherkammer (7) ein mit Kammerwänden (10) der Speicherkammer (7) in Verbindung stehendes wärmeleitfähiges Gitter (9), insbesondere Metallgitter, angeordnet ist.

9. Heizkörper nach einem der Ansprüche 4 bis 8, dadurch gekennzeichnet, daß die Speicherkammer (7) geometrisch an die Gestaltung der Heizkörper-Konvektionsfläche (3) angepaßt ist.

10. Heizkörper nach einem der Ansprüche 4 bis 9, dadurch gekennzeichnet, daß die Speicherkammer (7) zwischen zwei Konvektionsflächen (3) des Heizkörpers (1) angeordnet ist.

11. Heizkörper nach einem der Ansprüche 4 bis 10, dadurch gekennzeichnet, daß die Speicherkammer (7) in Form eines Plattenkörpers ausgebildet ist.

12. Heizkörper nach einem der Ansprüche 4 bis 11, dadurch gekennzeichnet, daß in dem Latentwärmespeichermedium ein Wärmetransportmittel auf Basis eines Feuerlöschmittels enthalten ist.

## Claims

1. Latent heat storage medium based on paraffinic hydrocarbons made from a mixture of paraffin hydrocarbons of different melting points given by different mass proportions, characterised in that to reduce the material load of a storage chamber filled with the latent heat storage material due to high volume contraction and dilation occurring when passing through the conversion temperature, up to 30 % of the mass of the latent heat storage medium has a melting point which lies up to 25 K below the main working range of the latent heat storage medium, wherein the main working range is defined by the melting point of the greatest mass proportion of the latent heat storage medium having about 60 or more mass per cent.

2. Latent heat storage medium according to claim 1, characterised in that up to 6 % of the mass of the latent heat storage medium lies 25 to 40 K above the main working range.

3. Latent heat storage medium according to claim 1 or 2, characterised in that up to 1 % of the mass of the latent heat storage medium is a polymer additive.

4. Heating element (1) for accommodation in a living room, having a convection surface (3) and, for example in the case of a heating element for hot water heating, a water chamber having an inflow and an outflow opening, having a latent heat storage medium according to one of claims 1 to 3, characterised by a separate, sealed storage chamber (7) in which the latent heat storage medium (8) is situated, wherein the storage chamber (7) can be heated by radiant heat or convection heat with formation of a gap between the water chamber and the storage chamber (7) also open to air flow.

5. Heating element (1) according to the features of the preamble of claim 4, characterised by a separate, sealed storage chamber (7), in which the latent heat storage medium (8) is situated, wherein the storage chamber is arranged on the living room side with respect to the water chamber and in surface contact with the latter.

6. Heating element (1) according to one of claims 4 or 5, characterised in that the storage chamber (7) is designed as a static latent heat store.

7. Heating element according to one of claims 4 or 5, characterised in that the storage chamber (7) is designed as a dynamic latent heat store.

8. Heating element according to one of claims 4 to 7, characterised in that a heat-conducting lattice (9), in particular metal lattice, connected to chamber walls (10) of the storage chamber (7) is arranged in the interior of the storage chamber (7).

9. Heating element according to one of claims 4 to 8, characterised in that the storage chamber (7) is matched geometrically to the shape of the heating element convection surface (3).

10. Heating element according to one of claims 4 to 9, characterised in that the storage chamber (7) is arranged between two convection surfaces (3) of the heating element (1).

11. Heating element according to one of claims 4 to 10, characterised in that the storage chamber (7) is designed in the form of a plate element.

12. Heating element according to one of claims 4 to 11, characterised in that a heat-transfer medium based on a fire-extinguishing agent is present in the latent heat storage medium.

## Revendications

1. Milieu de stockage de chaleur latente à base d'hydrocarbures paraffiniques, constitué d'un mélange fourni par différents pourcentages en masse d'hydrocarbures paraffiniques ayant différentes températures de fusion, caractérisé en ce que, pour abaisser la sollicitation du matériau d'une chambre de stockage remplie du matériau de stockage de chaleur latente, par suite des fortes contractions et dilatations en volume se manifestant lors du passage à la température de conversion, jusqu'à 30 % de la masse du milieu de stockage de chaleur latente présente une température de fusion située jusqu'à 25°K au-dessous de la plage de travail principale du milieu de stockage de chaleur latente, la plage de travail principale étant définie par la température de fusion de la proportion en masse maximale, d'un pourcentage en masse d'environ 60 pour cent ou plus, du milieu de stockage de chaleur latente.

2. Milieu de stockage de chaleur latente selon la revendication 1, caractérisé en ce que jusqu'à 6 % de la masse du milieu de stockage de chaleur latente est situé de 25 jusqu'à 40°K au-dessus de la plage de travail principale.

3. Milieu de stockage de chaleur latente selon la revendication 1 ou 2, caractérisé en ce que jusqu'à 1 % de la masse du milieu de stockage de chaleur latente est un additif polymère.

4. Corps de chauffage ou radiateur (1) destiné à être monté dans un local d'habitation, ayant une surface de convection (3) et, par exemple dans le cas d'un corps chauffant destiné au chauffage à l'eau chaude, une chambre à eau présentant une ouverture d'entrée d'écoulement et une ouverture de sortie d'écoulement, avec un milieu de stockage de chaleur latente selon l'une des revendications 1 à 3, caractérisé par une chambre de stockage (7) fermée séparée, dans laquelle se trouve un milieu de stockage de chaleur latente (8), la chambre de stockage (7) étant susceptible d'être chauffée par la chaleur de rayonnement ou la chaleur de convection, en constituant un espace intermédiaire ouvert également à l'écoulement d'air, entre la chambre à eau et la chambre de stockage (7).

5. Corps de chauffage (1) selon les caractéristiques du préambule de la revendication 4, caractérisé par une chambre de stockage (7) fermée. séparée, dans laquelle se trouve le milieu de stockage de chaleur latente (8), la chambre de stockage étant disposée du côté du local d'habitation par rapport à la chambre à eau et en contact de surface avec celle-ci.

6. Corps de chauffage (1) selon l'une des revendications 4 ou 5, caractérisé en ce que la chambre de stockage (7) est réalisée sous la forme de stockage de chaleur latente de nature statique.

7. Corps de chauffage selon l'une des revendications 4 ou 5, caractérisé en ce que la chambre de stockage (7) est réalisée sous la forme de stockage de chaleur latente de nature dynamique.

8. Corps de chauffage selon l'une des revendications 4 à 7, caractérisé en ce qu'à l'intérieur de la chambre de stockage (7) est disposée une grille (9) présentant une conductibilité thermique, placée en liaison avec des parois de chambre (10) appartenant à la chambre de stockage (7), en particulier une grille métallique.

9. Corps de chauffage selon l'une des revendications 4 à 8, caractérisé en ce que la chambre de stockage (7) est géométriquement adaptée à la configuration de la surface de convection (3) du corps de chauffage.

10. Corps de chauffage selon l'une des revendications 4 à 9, caractérisé en ce que la chambre de stockage (7) est disposée entre deux surfaces de convection (3) du corps de chauffage (1).

11. Corps de chauffage selon l'une des revendications 4 à 10, caractérisé en ce que la chambre de stockage (7) est réalisée sous la forme d'un corps en plaque.

12. Corps de chauffage selon l'une des revendications 4 à 11, caractérisé en ce que dans le milieu de stockage de chaleur latente est contenu un moyen de transport de chaleur à base d'un agent d'extinction du feu.
